# EUROPEAN PATENT APPLICATION

(11) **EP 4 624 744 A1**
(43) Date of publication of application: **01.10.2025**
(21) Application number: 23894184.3
(22) Date of filing: 27.07.2023
(51) Int. Cl.: F02M 21/02, F02D 19/02, F02M 31/16, F02M 31/20

(54) **GAS ENGINE SYSTEM**

(30) Priority: 21.11.2022 JP 2022185430
(71) Applicant: KAWASAKI JUKOGYO KABUSHIKI KAISHA, Kobe-shi, Hyogo 650-8670 (JP)
(72) Inventor: UCHI, Koshiro, Hyogo, 650-8670 (JP); KUBO, Daichi, Hyogo, 650-8670 (JP); HIGASHIDA, Masanori, Hyogo, 650-8670 (JP)
(74) Representative: Dehns
(86) International application number: PCT/JP2023/027579
(87) International publication number: WO 2024/111168

(57) **Abstract**

A gas engine system (1) according to one embodiment includes: a reciprocating engine that runs on a gas resulting from vaporization of a liquefied gas and to which air is supplied through an intake path; a liquid air producer (5) that produces liquid air using cold energy generated upon the vaporization of the liquefied gas; and a nitrogen gas supply path (71) through which nitrogen gas resulting from vaporization of liquid nitrogen contained in the liquid air is supplied to the intake path. For example, the liquefied gas is liquefied hydrogen.

## Description

### Technical Field

The present disclosure relates to a gas engine system.

### Background Art

Conventionally, a gas engine system is known which includes a reciprocating engine running on a gas such as natural gas or hydrogen gas. For example, Patent Literature 1 discloses a gas engine system including a reciprocating engine running on hydrogen gas. In the gas engine system of Patent Literature 1, in order to reduce NOₓ emissions, part of exhaust gas is mixed with air by EGR (Exhaust Gas Recirculation) and the mixture is supplied to the reciprocating engine.

### Citation List

### Patent Literature

PTL 1: Japanese Laid-Open Patent Application Publication No. 2006-299890

### Summary of Invention

### Technical Problem

The EGR is effective not only in reducing NOₓ emissions but also in reducing the occurrence of abnormal combustion such as pre-ignition, backfire, or knocking. However, the EGR often requires the use of a device such as a blower or scrubber dedicated for the EGR and poses challenges related to space and cost.

It is therefore an object of the present disclosure to provide a gas engine system that can reduce the occurrence of abnormal combustion without using EGR.

### Solution to Problem

The present disclosure provides a gas engine system including: a reciprocating engine that runs on a gas resulting from vaporization of a liquefied gas and to which air is supplied through an intake path; a liquid air producer that produces liquid air using cold energy generated upon the vaporization of the liquefied gas; and a nitrogen gas supply path through which nitrogen gas resulting from vaporization of liquid nitrogen contained in the liquid air is supplied to the intake path.

### Advantageous Effects of Invention

The present disclosure provides a gas engine system that can reduce the occurrence of abnormal combustion without using EGR.

### Brief Description of Drawings

FIG. 1 is a schematic configuration diagram showing a reciprocating engine and its related components in a gas engine system according to one embodiment.
FIG. 2 is a schematic configuration diagram showing a fuel supplier, a liquid air producer, and their related components in the gas engine system.
FIG. 3 is a schematic configuration diagram showing a fuel supplier, a liquid air producer, and their related components in a modified gas engine system.

### Description of Embodiments

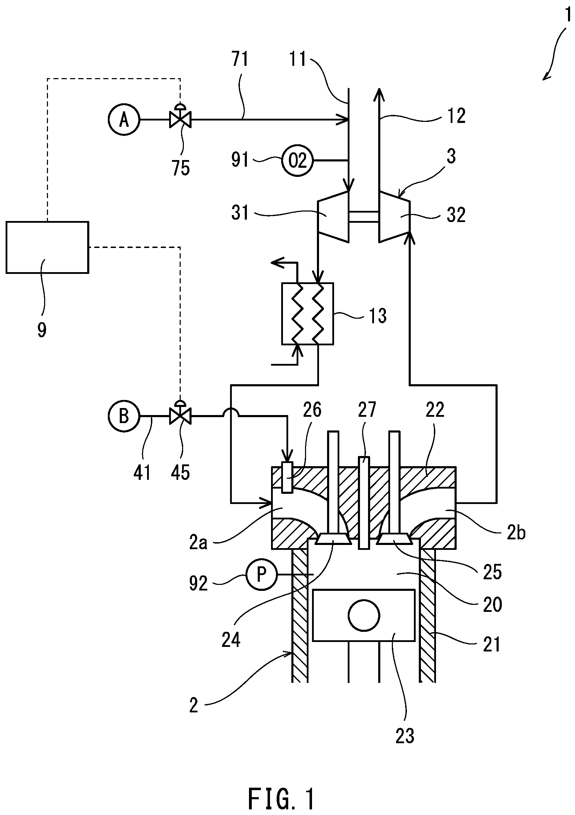

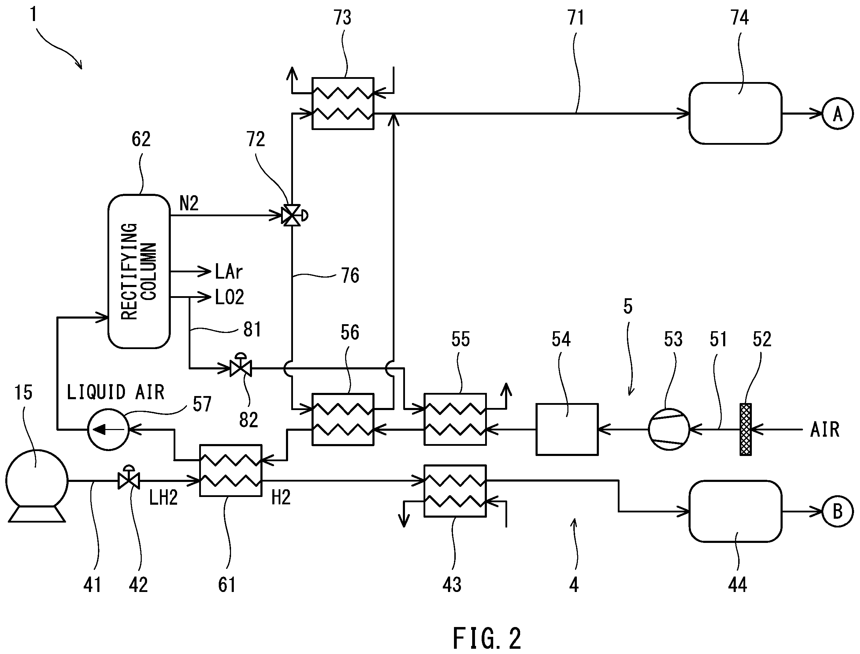

FIGS. 1 and 2 show a gas engine system 1 according to one embodiment. The gas engine system 1 includes: a reciprocating engine 2 running on a gas resulting from vaporization of a liquefied gas; a fuel supplier 4 that supplies the fuel to the reciprocating engine 2; and a liquid air producer 5 that produces liquid air using cold energy generated upon the vaporization of the liquefied gas.

The liquefied gas is retained in a tank 15. In the present embodiment, the liquefied gas is liquefied hydrogen and the fuel is hydrogen gas. That is, the temperature of the liquefied gas in the tank 15 is -253 °C. It should be noted that various liquefied gases other than liquefied hydrogen can be used as the liquefied gas which is the source of the fuel.

Air is supplied to the reciprocating engine 2 through an intake path 11, and exhaust gas is discharged from the reciprocating engine 2 through an exhaust path 12. In the present embodiment, a compressor 31 and a turbine 32 of a supercharger 3 are located in the intake path 11 and the exhaust path 12, respectively. In the intake path 11, an air cooler 13 is also located downstream of the compressor 31. The air cooler 13 cools the intake air compressed by the compressor 31 and having an increased temperature. For example, the air cooler 13 is a heat exchanger that effects heat exchange between the intake air and a heat medium such as atmospheric air or water.

In the present embodiment, the reciprocating engine 2 is a four-stroke engine. Alternatively, the reciprocating engine 2 may be a two-stroke engine.

The reciprocating engine 2 includes: cylinders 21 arranged in the axial direction of the crankshaft (only one of the cylinders 21 is shown as a representative in FIG. 1); and cylinder heads 22 each of which is attached to a corresponding one of the cylinders 21. A piston 23 is located within each cylinder 21, and a combustion chamber 20 is defined between the piston 23 and the cylinder head 22.

The cylinder head 22 includes an intake port 2a and an exhaust port 2b. To the cylinder head 22 are mounted an intake valve 24 that opens and closes the opening of the intake port 2a that leads to the combustion chamber 20 and an exhaust valve 25 that opens and closes the opening of the exhaust port 2b that leads to the combustion chamber 20.

Furthermore, to the cylinder head 22 are mounted a fuel injection valve 26 that injects the fuel in the intake port 2a or the combustion chamber 20 and an igniter 27 that ignites an air-fuel mixture of the intake air and the fuel in the combustion chamber 20. The fuel injection valve 26 need not necessarily be mounted to the cylinder head 22 and may be located in the intake path 11.

The igniter 27 may be an ignition plug or a pre-chamber-type igniter including a pre-chamber communicating with the combustion chamber 20 through an ejection hole. Alternatively, the igniter 27 may be an igniter that injects a pilot oil into the combustion chamber 20 and allows the pilot oil to self-ignite.

The fuel supplier 4 includes a fuel supply path 41 connecting the tank 15 to the fuel injection valve 26. In the fuel supply path 41, a flow rate regulating valve 42, a main heat exchanger 61, an auxiliary heat exchanger 43, a buffer tank 44, and a flow rate regulating valve 45 are arranged in an upstream-to-downstream order.

The flow rate regulating valve 42 regulates the flow rate of the liquefied gas (liquefied hydrogen in the present embodiment) flowing from the tank 15 into the main heat exchanger 61. The main heat exchanger 61 vaporizes the liquefied gas by effecting heat exchange between the liquefied gas and air. The auxiliary heat exchanger 43 heats the vaporized gas (hydrogen gas in the present embodiment) flowing out of the main heat exchanger 61 to a temperature required in the reciprocating engine 2. For example, the auxiliary heat exchanger 43 is a heat exchanger that effects heat exchange between the vaporized gas and a heat medium such as atmospheric air and water. The heat medium cooled by the auxiliary heat exchanger 43 may be used as a cold energy source in the air cooler 13 described above, or the auxiliary heat exchanger 43 itself may be used as the air cooler 13. The buffer tank 44 temporarily retains the vaporized gas. The flow rate regulating valve 45 regulates the flow rate of the vaporized gas supplied from the buffer tank 44 to the fuel injection valve 26.

The liquid air producer 5 includes an air path 51 having one end opening into the atmosphere and the other end connected to a rectifying column 62. In the air path 51, a filter 52, a blower 53, a moisture-carbon dioxide separator 54, a first auxiliary heat exchanger 55, a second auxiliary heat exchanger 56, the main heat exchanger 61, and a pump 57 are arranged in an upstream-to-downstream order. That is, the main heat exchanger 61 is shared by the fuel supplier 4 and the liquid air producer 5.

The blower 53 is a means that delivers air from the one end of the air path 51 to the main heat exchanger 61, and the filter 52 removes foreign matter from the air taken in from the atmosphere. The moisture-carbon dioxide separator 54 removes moisture and carbon dioxide from the air having passed through the filter 52. The air from which moisture and carbon dioxide have been removed is preliminarily cooled by the first auxiliary heat exchanger 55 and the second auxiliary heat exchanger 56 and then delivered to the main heat exchanger 61, in which the air exchanges heat with the liquefied gas (liquefied hydrogen in the present embodiment) and thus cools to a temperature lower than the boiling point of nitrogen and becomes liquefied. The liquefied air flowing out of the main heat exchanger 61 is supplied to the rectifying column 62 by the pump 57.

In the rectifying column 62, a vapor flowing upward through the column and a reflux liquid flowing downward through the column come into contact. Thus, liquid oxygen is extracted from the lower portion of the rectifying column 62, nitrogen gas is extracted from the upper portion of the rectifying column 62, and liquid argon is extracted from the middle portion of the rectifying column 62. Liquid nitrogen can also be extracted from the middle portion of the rectifying column 62.

The liquid oxygen extracted from the lower portion of the rectifying column 62 is introduced into the above-described first auxiliary heat exchanger 55 through an oxygen supply path 81 and is used as a cold energy source to cool air at a point upstream of the main heat exchanger 61. The oxygen gas resulting from vaporization in the first auxiliary heat exchanger 55 is discharged into the atmosphere. In the oxygen supply path 81 there is a flow rate regulating valve 82 that regulates the rate of extraction of the liquid oxygen.

The nitrogen gas extracted from the upper portion of the rectifying column 62, namely the nitrogen gas resulting from vaporization of liquid nitrogen contained in the liquid air produced by the liquid air producer 5, is supplied to the intake path 11 through a nitrogen gas supply path 71. In the present embodiment, the nitrogen gas supply path 71 joins the intake path 11 at a point upstream of the compressor 31. Alternatively, the nitrogen gas supply path 71 may join the intake path 11 at a point downstream of the compressor 31.

In the nitrogen gas supply path 71, a flow rate regulating valve 72, a heat exchanger 73, a buffer tank 74, and a flow rate regulating valve 75 are arranged in an upstream-to-downstream order. The flow rate regulating valve 72 regulates the flow rate of the nitrogen gas extracted from the upper portion of the rectifying column 62. The heat exchanger 73 heats the nitrogen gas to a temperature around the atmospheric temperature. For example, the heat exchanger 73 is a heat exchanger that effects heat exchange between the nitrogen gas and a heat medium such as atmospheric air or water. The heat medium cooled in the heat exchanger 73 may be used as a cold energy source in the air cooler 13 described above, or the heat exchanger 73 itself may be used as the air cooler 13. The buffer tank 74 temporarily retains the nitrogen gas. The flow rate regulating valve 75 regulates the flow rate of the nitrogen gas supplied from the buffer tank 74 to the intake path 11.

Furthermore, in the present embodiment, a bypass path 76 is connected to the nitrogen gas supply path 71 to bypass the heat exchanger 73. More specifically, in the present embodiment, the flow rate regulating valve 72 is a three-way valve, and the upstream end of the bypass path 76 is connected to the flow rate regulating valve 72. The downstream end of the bypass path 76 is connected to the nitrogen gas supply path 71 at a point downstream of the heat exchanger 73.

The bypass path 76 passes through the second auxiliary heat exchanger 56 of the liquid air producer 5, and the flow rate regulating valve 72 serves to switch the destination of the nitrogen gas extracted from the rectifying column 62 between the heat exchanger 73 and the second auxiliary heat exchanger 56. When introduced into the second auxiliary heat exchanger 56, the nitrogen gas is used as a cold energy source to cool air at a point upstream of the main heat exchanger 61.

The flow rate regulating valves 42, 45, 72, 75, and 82 described above are controlled by a controller 9. In FIGS. 1 and 2, some of the signal lines are omitted for the sake of simplicity of the figures.

As regards the controller 9, the functionality of the elements disclosed herein may be implemented using circuitry or processing circuitry which includes general purpose processors, special purpose processors, integrated circuits, ASICs (Application Specific Integrated Circuits), conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known hardware which is programmed or configured to carry out the recited functionality. When the hardware is a processor which may be considered a type of circuitry, the circuitry, means, or units are a combination of hardware and software, the software being used to configure the hardware and/or processor.

As regards, in particular, the control of the flow rate regulating valve 45, the controller 9 controls the flow rate regulating valve 45 based on the rotation angle of the crankshaft and the output required of the reciprocating engine 2.

The controller 9 is electrically connected to an oxygen concentration meter 91 and a pressure sensor 92. The oxygen concentration meter 91 detects the oxygen concentration in a portion of the intake path 11 that is downstream of the point where the nitrogen gas supply path 71 joins the intake path 11. The pressure sensor 92 detects the pressure in the combustion chamber 20. The controller 9 controls the flow rate regulating valve 75 in accordance with the oxygen concentration detected by the oxygen concentration meter 91 and the pressure detected by the pressure sensor 92. For example, the controller 9 controls the flow rate regulating valve 75 to adjust the oxygen concentration detected by the oxygen concentration meter 91 to a target oxygen concentration. In addition, the controller 9 determines whether abnormal combustion such as pre-ignition, backfire, or knocking has occurred based on the pressure detected by the pressure sensor 92. In case that abnormal combustion has occurred, the controller 9 increases the opening degree of the flow rate regulating valve 75.

In the gas engine system 1 configured as described above, the air-fuel mixture of the intake air and the fuel has an elevated nitrogen concentration, which leads to an increase in the minimum ignition energy which is the minimum energy required to induce flame propagation in the air-fuel mixture. This reduces the occurrence of abnormal combustion such as pre-ignition or backfire. Furthermore, the occurrence of knocking is also reduced since the elevation of the nitrogen concentration in the air-fuel mixture lengthens the ignition delay which is the time from when the temperature of the air-fuel mixture is fixed at a given temperature until the air-fuel mixture ignites. As such, the occurrence of abnormal combustion can be reduced without using EGR. In addition, NOₓ emissions can also be reduced since the adiabatic flame temperature is lowered due to the elevation of the nitrogen concentration in the air-fuel mixture. Moreover, nitrogen gas is produced using cold energy generated upon vaporization of the liquefied gas serving as the source of the fuel, and thus the nitrogen gas production does not require much energy.

In particular, when the fuel is hydrogen gas as in the present embodiment, the elevation of the nitrogen concentration in the air-fuel mixture is of high importance to reduce the occurrence of pre-ignition since hydrogen causes a lower minimum ignition energy as well as a shorter ignition delay than methane.

### (Modifications)

The present disclosure is not limited to the embodiment described above, and various modifications can be made without departing from the gist of the present disclosure.

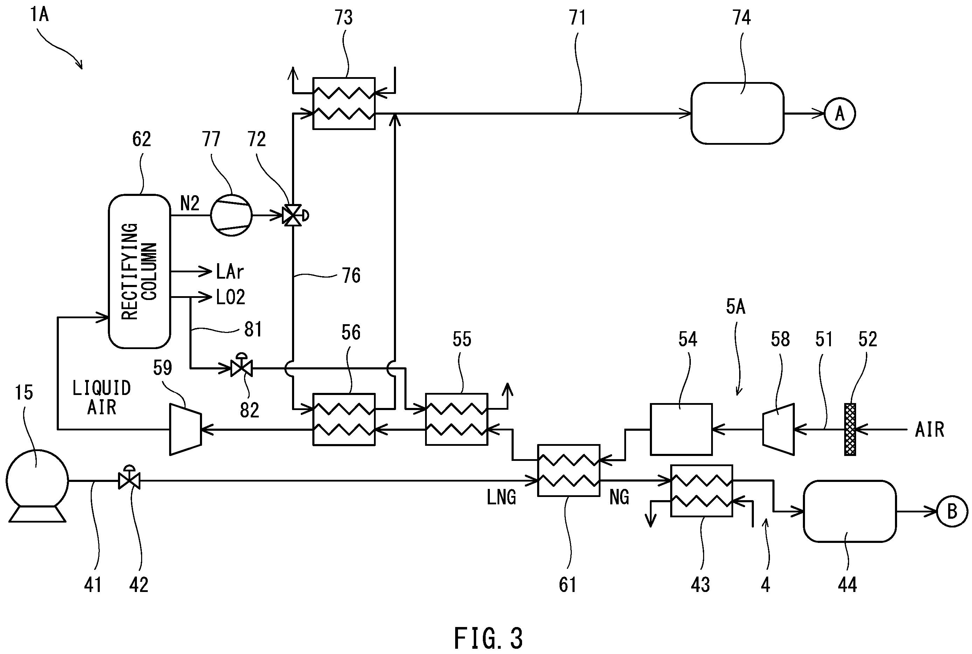

For example, as in a modified gas engine system 1A shown in FIG. 3, the liquefied gas retained in the tank 15 may be LNG, and natural gas resulting from vaporization of the LNG may be the fuel of the reciprocating engine 2. In this case, the temperature of the liquefied gas in the tank 15 is -162 °C.

The gas engine system 1A employs a liquid air producer 5A which differs from the liquid air producer 5 of the above-described embodiment in that the main heat exchanger 61 is located between the moisture-carbon dioxide separator 54 and the first auxiliary heat exchanger 55 and that a compressor 58 and an expansion turbine 59 are used instead of the blower 53 and the pump 57. The air flowing through the air path 51 is gaseous before entering the expansion turbine 59 and is liquefied by being expanded by the expansion turbine 59. That is, liquefied air (with a temperature of, for example, -200 °C) containing liquefied oxygen and liquefied nitrogen is supplied from the expansion turbine 59 to the rectifying column 62.

When the liquefied gas is LNG as shown in FIG. 3, the fact that the temperature of LNG at the atmospheric pressure is higher than the boiling point of nitrogen imposes the need to apply compression power to the air in the liquid air production. In contrast, when the liquefied gas is liquefied hydrogen as in the above-described embodiment, there is no need for such compression power since the temperature of liquefied hydrogen at the atmospheric pressure is lower than the boiling point of nitrogen.

In the gas engine system 1A, a blower 77 serving as a means for nitrogen gas delivery is located between the rectifying column 62 and the flow rate regulating valve 72 in the nitrogen gas supply path 71.

### (Summary)

In a first aspect, the present disclosure provides a gas engine system including: a reciprocating engine that runs on a gas resulting from vaporization of a liquefied gas and to which air is supplied through an intake path; a liquid air producer that produces liquid air using cold energy generated upon the vaporization of the liquefied gas; and a nitrogen gas supply path through which nitrogen gas resulting from vaporization of liquid nitrogen contained in the liquid air is supplied to the intake path.

In the above configuration, the air-fuel mixture of the intake air and the fuel has an elevated nitrogen concentration, which leads to an increase in the minimum ignition energy which is the minimum energy required to induce flame propagation in the air-fuel mixture. This reduces the occurrence of abnormal combustion such as pre-ignition or backfire. Furthermore, the occurrence of knocking is also reduced since the elevation of the nitrogen concentration in the air-fuel mixture lengthens the ignition delay which is the time from when the temperature of the air-fuel mixture is fixed at a given temperature until the air-fuel mixture ignites. As such, the occurrence of abnormal combustion can be reduced without using EGR. In addition, NOₓ emissions can also be reduced since the adiabatic flame temperature is lowered due to the elevation of the nitrogen concentration in the air-fuel mixture. Moreover, nitrogen gas is produced using cold energy generated upon vaporization of the liquefied gas serving as the source of the fuel, and thus the nitrogen gas production does not require much energy.

**In** a second aspect according to the first aspect, the liquefied gas may be liquefied hydrogen. When the liquefied gas is LNG, the fact that the temperature of LNG at the atmospheric pressure is higher than the boiling point of nitrogen imposes the need to apply compression power to the air in the liquid air production. In contrast, when the liquefied gas is liquefied hydrogen, there is no need for such compression power since the temperature of liquefied hydrogen at the atmospheric pressure is lower than the boiling point of nitrogen.

**In** a third aspect according to the first or second aspect, for example, the liquid air producer may include a heat exchanger that effects heat exchange between the liquefied gas and air from which moisture and carbon dioxide have been removed.

**In** a fourth aspect according to any one of the first to third aspects, for example, the gas engine system may further include: a flow rate regulating valve located in the nitrogen gas supply path; and a controller that controls the flow rate regulating valve in accordance with an oxygen concentration in a portion of the intake path that is downstream of a point where the nitrogen gas supply path joins the intake path.

## Claims

1. A gas engine system comprising:
a reciprocating engine that runs on a gas resulting from vaporization of a liquefied gas and to which air is supplied through an intake path;
a liquid air producer that produces liquid air using cold energy generated upon the vaporization of the liquefied gas; and
a nitrogen gas supply path through which nitrogen gas resulting from vaporization of liquid nitrogen contained in the liquid air is supplied to the intake path.

2. The gas engine system according to claim 1, wherein the liquefied gas is liquefied hydrogen.

3. The gas engine system according to claim 1 or 2, wherein the liquid air producer includes a heat exchanger that effects heat exchange between the liquefied gas and air from which moisture and carbon dioxide have been removed.

4. The gas engine according to claim 1 or 2, further comprising:
a flow rate regulating valve located in the nitrogen gas supply path; and
a controller that controls the flow rate regulating valve in accordance with an oxygen concentration in a portion of the intake path that is downstream of a point where the nitrogen gas supply path joins the intake path.
